# EUROPEAN PATENT APPLICATION

(11) **EP 2 881 566 A1**
(43) Date of publication of application: **10.06.2015**
(21) Application number: 14190106.6
(22) Date of filing: 23.10.2014
(51) Int. Cl.: F02D 41/00, F02D 37/02, F02N 11/04, F02N 19/00, F02B 61/02, F02M 69/04, F02D 9/10, F02M 69/32, F02N 11/08, F02D 41/04, F02D 41/06, F02D 13/02

(54) **STOP-START SYSTEM FOR A SADDLE-STRADDLING TYPE MOTOR VEHICLE**

(30) Priority: 04.12.2013 JP 2013250981
(71) Applicant: Yamaha Hatsudoki Kabushiki Kaisha, Iwata-shi, Shizuoka-ken 438 (JP)
(72) Inventor: Masuda, Takahiro, Shizuoka, 438-8501 (JP); Yamaguchi, Yuki, Shizuoka, 438-8501 (JP)
(74) Representative: Zimmermann, Tankred Klaus

(57) **Abstract**

At the time of a stop of an engine (10), in a state in which air is flowing into a combustion chamber (31 a), a crankshaft (13) is rotated in a forward direction by inertia without combustion of a fuel-air mixture. At the time of start-up of the engine (10), the crankshaft (13) is rotated in a reverse direction, and an intake port (21) is opened and the fuel-air mixture is introduced into the combustion chamber (31a) when a crank angle is in a start-up intake range. Thereafter, the fuel-air mixture in the combustion chamber (31a) is ignited when the crank angle is in a start-up ignition range. In this case, the crankshaft (13) is driven to be rotated in the forward direction by the energy generated by an explosion that occurs in the combustion chamber (31a).

## Description

### BACKGROUND OF THE INVENTION

### Field of the Invention

The present invention relates to an engine system and a saddle-straddling type motor vehicle.

### Description of Related Art

In a saddle-straddling type motor vehicle such as a motorcycle, at the time of start-up operation of an engine, a larger torque is necessary for a crankshaft to first go over a crank angle corresponding to a compression top dead center. Therefore, there is a technique for rotating the crankshaft in a reverse direction in order to enhance startability of the engine.

In an engine start-up control device described in JP 2005-248921 A, the crankshaft is rotated in the reverse direction to a predetermined position by a starter/generator provided at the crankshaft after a stop of the engine. Thereafter, the crankshaft is rotated in a forward direction from that position at the time of a start-up of the engine.

### BRIEF SUMMARY OF THE INVENTION

An object of the present invention is to provide an engine system that can stably and quickly start an engine, and a saddle-straddling type motor vehicle including the engine system.

This object is achieved by an engine system according to claim 1, and by a saddle-straddling type motor vehicle according to claim 8.

The invention is based on the inventors' findings that in JP 2005-248921 A, even when the crankshaft is rotated in the forward direction after being rotated in the reverse direction in this manner, a sufficient torque may not be obtained, and the crankshaft may not be able to go over the crank angle corresponding to the compression top dead center.
(1) According to one aspect of the present invention, an engine system includes an engine unit that includes an engine and a rotation driver, an intake passage that leads air to the engine, a flow rate adjuster for adjusting a flow rate of air in the intake passage and a controller that controls the engine unit and the flow rate adjuster, wherein the engine includes a cylinder, a fuel injection device arranged to inject fuel into the intake passage at a downstream of the flow rate adjuster, an ignition device configured to ignite a fuel-air mixture in a combustion chamber, and a valve driver configured to respectively drive an intake valve for opening and closing an intake port and an exhaust valve for opening and closing an exhaust port, the rotation driver drives a rotation of a crankshaft of the engine in a forward direction or a reverse direction, the valve driver drives the intake valve such that the intake port is opened when a crank angle is in a predetermined start-up intake range, during the rotation of the crankshaft in the reverse direction, and the controller controls the flow rate adjuster such that air flows in the intake passage and the combustion chamber, and controls the fuel injection device and the ignition device such that the crankshaft is rotated in the forward direction by inertia without combustion of the fuel-air mixture in the combustion chamber, at a time of stop operation of the engine, and controls the rotation driver such that the crankshaft is rotated in the reverse direction until the crank angle goes over the start-up intake range and reaches a predetermined start-up ignition range, controls the fuel injection device such that the fuel-air mixture is introduced into the combustion chamber through the intake port when the crank angle is in the start-up intake range, and controls the ignition device such that the fuel-air mixture in the combustion chamber is ignited when the crank angle is in the start-up ignition range, at a time of start-up operation of the engine.
   In this engine system, in a state in which air is flowing in the intake passage and the combustion chamber, the crankshaft is rotated in the forward direction by inertia without combustion of the fuel-air mixture at the time of the stop of the engine. In this case, air continuously flows through the intake passage and the combustion chamber. Thus, a combusted gas is sufficiently exhausted from the engine.
   At the start-up of the engine, the crankshaft is rotated in the reverse direction, and the intake port is opened and the fuel-air mixture is introduced into the combustion chamber when the crank angle is in the start-up intake range. In this case, because the combusted gas is sufficiently exhausted from the engine, even when the crankshaft is rotated in the reverse direction, the combusted gas is prevented from flowing backward and being led to the combustion chamber and the intake passage. Thus, a fuel-air ratio in the combustion chamber can be accurately adjusted.
   Thereafter, the fuel-air mixture in the combustion chamber is ignited when the crank angle is in the start-up ignition range. In this case, the crankshaft is driven to be rotated in the forward direction by the energy generated by an explosion that occurs in the combustion chamber. As described above, because the combusted gas is prevented from flowing backward, an occurrence of insufficient combustion is prevented. Thus, the crankshaft can easily go over the crank angle corresponding to the compression top dead center. As a result, the engine can be stably and quickly started.
(2) The controller may control the flow rate adjuster such that a combusted gas does not flow backward to the intake passage, during the rotation of the crankshaft in the reverse direction by the rotation driver.
   In this case, because the intake passage is maintained at the positive pressure, even when the intake port and the exhaust port are opened with the crankshaft being rotated in the reverse direction, the gas is unlikely to flow backward. Therefore, the combusted gas is prevented from being led to the combustion chamber and the intake passage.
(3) The engine unit may further include a rotation speed detector that detects a rotation speed of the crankshaft, and the controller may control the flow rate adjuster such that air flows in the intake passage and the combustion chamber when a rotation speed detected by the rotation speed detector is not less than a predetermined value, and may control the flow rate adjuster such that air does not flow in the intake passage and the combustion chamber when the rotation speed detected by the rotation speed detector is lower than the predetermined value, at the time of the stop operation of the engine.
   In this case, when the rotation of the crankshaft is stopped, the flow rate adjustor is switched in advance in preparation for the next start-up such that the gas does not flow backward. Therefore, at the time of the start-up of the engine, a time period for switching the flow rate adjuster becomes unnecessary and the rotation of the crankshaft in the reverse direction can be started at once. Therefore, a time period required for the start-up of the engine can be shortened.
(4) The flow rate adjuster may include a throttle valve provided in the intake passage.
   In this case, the throttle valve functions as the flow rate adjustor, so that the structure of the flow rate adjustor can be simplified.
(5) The engine system may further include a throttle valve provided in the intake passage, wherein the flow rate adjuster may include an auxiliary passage provided at the intake passage to bypass the throttle valve, and an auxiliary valve provided to open and close the auxiliary passage.
   In this case, the auxiliary valve separately provided from the throttle valve functions as the flow rate adjuster, whereby the control of the throttle valve and the auxiliary valve becomes easier.
(6) The controller may control the auxiliary valve such that the rotation speed of the crankshaft is maintained in a constant range, after a start-up of the engine with the throttle valve being closed.
   In this case, the idling of the engine can be appropriately maintained after the start-up of the engine and before the throttle valve is opened.
(7) The valve driver may drive the exhaust valve such that the exhaust port is opened when the crank angle is in a normal exhaust range, and drives the intake valve such that the intake port is opened when the crank angle is in a normal intake range, during the rotation of the crankshaft in the forward direction, and the normal exhaust range may include the start-up intake range.
   In this case, because a range of the crank angle in which the exhaust is to be performed during the rotation in the forward direction corresponds to a range of the crank angle in which the intake is to be performed during the rotation in the reverse direction, the start-up intake range is included in the normal exhaust range, whereby the exhaust during the rotation in the forward direction and the intake during the rotation in the reverse direction can be respectively appropriately performed.
(8) According to another aspect of the present invention, a saddle-straddling type motor vehicle includes a main body that has a drive wheel, and the engine system according to one aspect of the present invention that generates motive power for rotating the drive wheel.

In this saddle-straddling type motor vehicle, the drive wheel is rotated by the motive power generated by the engine system. Thus, the main body is moved. In this case, because the engine system according to one aspect of the above-mentioned present invention is used, the engine can be stably and quickly started. Thus, a driving feeling of the saddle-straddling type motor vehicle is improved.

### BRIEF DESCRIPTION OF THE SEVERAL VIEWS OF THE DRAWING

Fig. 1 is a schematic side view showing the schematic configuration of a motorcycle according to one embodiment of the present invention;
Fig. 2 is a schematic diagram for explaining the configuration of an engine system;
Fig. 3 is a diagram for explaining the operation of an engine unit;
Fig. 4 is a diagram for explaining the operation of the engine unit;
Figs. 5(a) and 5(b) are diagrams for explaining backflow of a combusted gas;
Fig. 6 is a diagram for explaining the backflow of the combusted gas;
Fig. 7 is a timing chart for explaining an ISC opening at the time of a stop of an engine;
Figs. 8(a) and 8(b) are schematic diagrams for explaining a flow of gas at the time of the stop of the engine;
Fig. 9 is a timing chart for explaining the ISC opening at the time of a start-up of the engine;
Figs. 10(a) and 10(b) are schematic diagrams for explaining the flow of gas at the time of the stop of the engine;
Fig. 11 is a flow chart of an engine stop process;
Fig. 12 is a flow chart of an engine start-up process; and
Fig. 13 is a flow chart of the engine start-up process.

### DESCRIPTION OF THE PREFERRED EMBODIMENTS

A motorcycle will be described below with reference to drawings as one example of a saddle-straddling type motor vehicle according to embodiments of the present invention.

### (1) Motorcycle

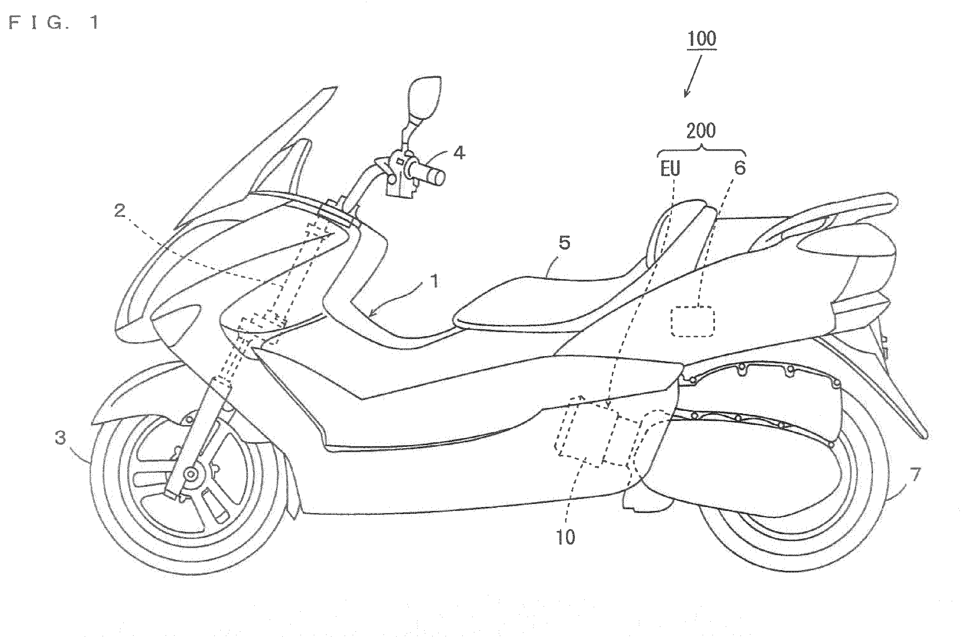

Fig. 1 is a schematic side view showing the schematic configuration of the motorcycle according to one embodiment of the present invention. In the motorcycle 100 of Fig. 1, a front fork 2 is provided at the front of a vehicle body 1 to be swingable to the right and the left. A handle 4 is attached to the upper end of the front fork 2, and a front wheel 3 is attached to the lower end of the front fork 2 to be rotatable.

A seat 5 is provided at substantially the center of the upper portion of the vehicle body 1. An ECU (Engine Control Unit) 6 is arranged at the lower portion behind the seat 5, and an engine unit EU is provided below the seat 5. The engine unit EU includes a single-cylinder engine 10, for example. An engine system 200 is constituted by the ECU 6 and the engine unit EU. A rear wheel 7 is attached to the lower portion of the rear end of the vehicle body 1 to be rotatable. The rotation of the rear wheel 7 is driven by the motive power generated by the engine 10.

### (2) Engine System

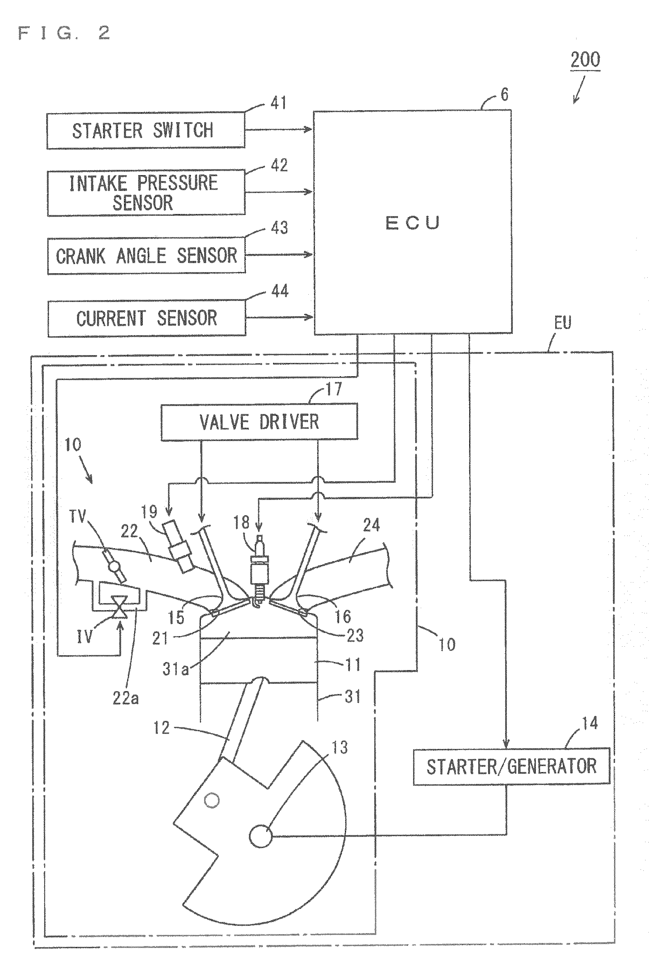

Fig. 2 is a schematic diagram for explaining the configuration of the engine system 200. As shown in Fig. 2, the engine unit EU includes the engine 10 and a starter/generator 14. The engine 10 includes a piston 11, a connecting rod 12, a crankshaft 13, an intake valve 15, an exhaust valve 16, a valve driver 17, an ignition plug 18 and an injector 19.

The piston 11 is provided to be reciprocatable in a cylinder 31 and connected to the crankshaft 13 via the connecting rod 12. The reciprocating motion of the piston 11 is transformed into the rotational motion of the crankshaft 13. The starter/generator 14 is provided at the crankshaft 13. The starter/generator 14 is a generator having the function of a starter motor, drives the rotation of the crankshaft 13 in forward and reverse directions and generates electric power by the rotation of the crankshaft 13. In the following description, the forward direction and the reverse direction mean rotation directions of the crankshaft 13, respectively. The starter/generator 14 directly transmits a torque to the crankshaft 13 without a reduction gear therebetween. The starter motor and the generator may be separately provided instead of the starter/generator 14. A one-way clutch (not shown) is provided between the crankshaft 13 and the rear wheel 7. The rotation of the crankshaft 13 in the forward direction (hereinafter referred to as a forward rotation) is transmitted to the rear wheel 7 through the one-way clutch, and the rotation of the crankshaft 13 in the reverse direction (hereinafter referred to as a reverse rotation) is not transmitted to the rear wheel 7.

A combustion chamber 31a is formed on the piston 11. The combustion chamber 31a communicates with an intake passage 22 through an intake port 21 and communicates with an exhaust passage 24 through an exhaust port 23. An intake valve 15 is provided to open and close the intake port 21, and an exhaust valve 16 is provided to open and close the exhaust port 23. The intake valve 15 and the exhaust valve 16 are driven by the valve driver 17. The valve driver 17 is a camshaft, a hydraulic valve mechanism or an electromagnetic valve mechanism, for example. The ignition plug 18 is configured to ignite a fuel-air mixture in the combustion chamber 31a. The injector 19 is configured to inject fuel into the intake passage 22.

A throttle valve TV for adjusting a flow rate of air (hereinafter referred to as fresh air) from the outside is provided at the intake passage 22. An auxiliary passage 22a is provided at the intake passage 22 to bypass the throttle valve TV. An ISC (Idle Speed Control) valve IV is provided at the auxiliary passage 22a. An opening of the ISC valve IV (hereinafter referred to as an ISC opening) is adjusted, whereby a rotation speed of the engine 10 during idling is adjusted. Further, in the present embodiment, the ISC opening is adjusted, so that a combusted gas is prevented from flowing backward. The adjustment of the ISC opening will be described below.

The ECU 6 includes a CPU (Central Processing Unit) and a memory, for example. A microcomputer may be used instead of the CPU and the memory. A starter switch 41, an intake pressure sensor 42, a crank angle sensor 43 and a current sensor 44 are electrically connected to the ECU 6. The starter switch 41 is provided at the handle 4 of Fig. 1, for example, and is operated by a rider. The intake pressure sensor 42 detects pressure in the intake passage 22. The crank angle sensor 43 detects a rotation angle and a rotation speed of the crankshaft 13. The current sensor 44 detects a current that flows in the starter/generator 14 (hereinafter referred to as a motor current).

The operation of the starter switch 41 is supplied to the ECU 6 as an operation signal, and the detection results by the intake pressure sensor 42, the crank angle sensor 43 and the current sensor 44 are supplied to the ECU 6 as detection signals. The ECU 6 controls the starter/generator 14, the ignition plug 18 and the injector 19 and the ISC valve IV based on the supplied operation signal and the detection signals.

### (3) Operation of Engine

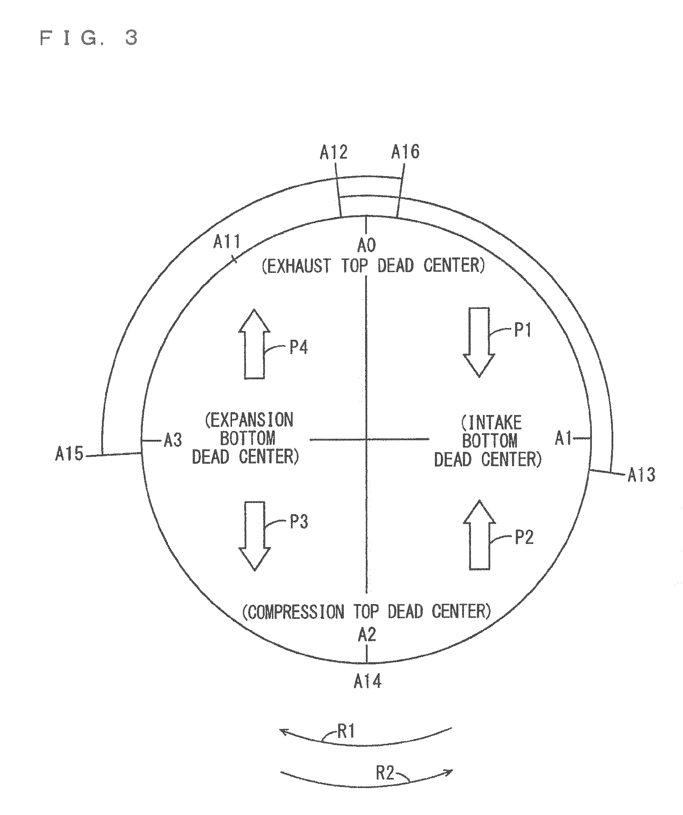

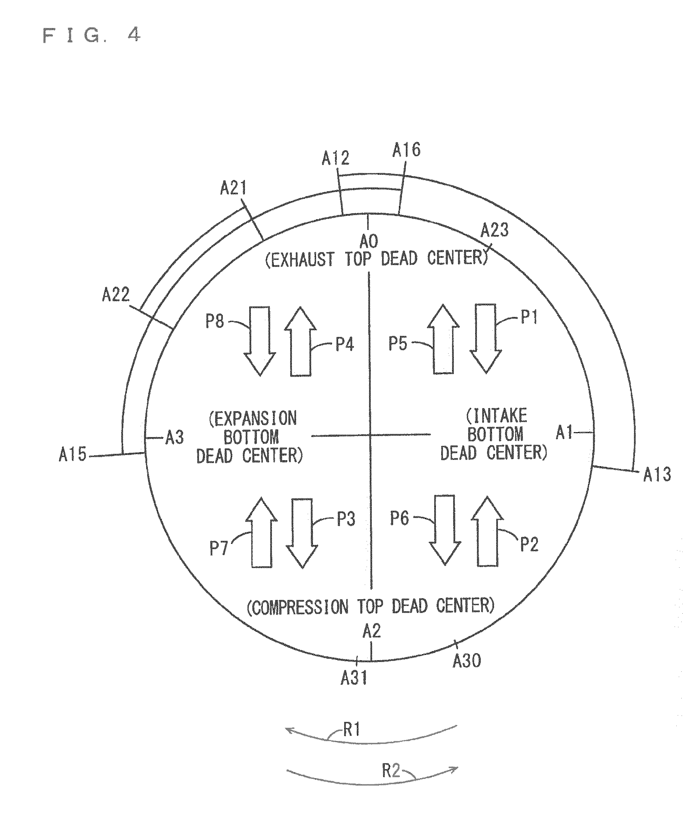

Figs. 3 and 4 are diagrams for explaining the operation of the engine unit EU. Fig. 3 shows the operation of the engine unit EU during normal running of the engine 10, and Fig. 4 shows the operation of the engine unit EU at the time of the start-up of the engine 10.

The start-up of the engine 10 is performed when the starter switch 41 of Fig. 2 is turned on, for example. Further, the ECU 6 may automatically stop or start the engine 10 based on the operation for stopping or starting the motorcycle 100 by the rider. For example, the engine 10 is automatically stopped when a predetermined idle stop condition is satisfied, and the engine 10 is automatically started when a predetermined idle stop release condition is satisfied.

The idle stop condition includes a condition that relates to at least one of a degree of opening of the throttle valve TV (a throttle opening), a vehicle speed and a rotation speed of the engine 10, for example. The idle stop release condition is that the throttle opening becomes larger than 0 due to the operation of an accelerator grip, for example. Hereinafter, a state in which the engine 10 is automatically stopped because the idle stop condition is satisfied is referred to as an idle stop state. Further, the normal running is a state in which the engine 10 stably operates after the start-up of the engine 10.

In the following description, a rotation position of the crankshaft 13 is referred to as a crank angle. Further, a top dead center through which the piston 11 passes at the time of switching from a compression stroke to an expansion stroke is referred to as a compression top dead center, and a top dead center through which the piston 11 passes at the time of switching from an exhaust stroke to an intake stroke is referred to as an exhaust top dead center. A bottom dead center through which the piston 11 passes at the time of switching from the intake stroke to the compression stroke is referred to as an intake bottom dead center, and a bottom dead center through which the piston 11 passes at the time of switching from the expansion stroke to the exhaust stroke is referred to as an expansion bottom dead center.

In Figs. 3 and 4, a rotation angle in a range of two rotations (720 degrees) of the crankshaft 13 is indicated by one circle. The two rotations of the crankshaft 13 is equivalent to one cycle of the engine 10. The one cycle of the engine 10 includes the intake stroke, the compression stroke, the expansion stroke and the exhaust stroke.

The crank angle sensor 43 of Fig. 2 detects the rotation angle in a range of one rotation (360 degrees) of the crankshaft 13. The ECU 6 determines which one of the two rotations of the crankshaft 13 equivalent to the one cycle of the engine 10 the crank angle detected by the crank angle sensor 43 corresponds to based on the pressure in the intake passage 22 detected by the intake pressure sensor 42. Thus, the ECU 6 can obtain the rotation angle in the range of the two rotations (720 degrees) of the crankshaft 13.

In Figs. 3 and 4, an angle A0 is the crank angle when the piston 11 (Fig. 2) is positioned at the exhaust top dead center, an angle A2 is the crank angle when the piston 11 is positioned at the compression top dead center, an angle A1 is the crank angle when the piston 11 is positioned at the intake bottom dead center, and an angle A3 is the crank angle when the piston 11 is positioned at the expansion bottom dead center. The arrow R1 indicates a direction in which the crank angle changes during the forward rotation of the crankshaft 13, and the arrow R2 indicates a direction in which the crank angle changes during the reverse rotation of the crankshaft 13. The arrows P1 to P4 indicate moving directions of the piston 11 during the forward rotation of the crankshaft 13, and the arrows P5 to P8 indicate the moving directions of the piston 11 during the reverse rotation of the crankshaft 13

### (3-1) During Normal Running

The operation of the engine unit EU during the normal running of the engine 10 will be described with reference to Fig. 3. During the normal running, the crankshaft 13 (Fig. 2) is rotated in the forward direction. Thus, the crank angle changes in the direction of the arrow R1. In this case, as indicated by the arrows P1 to P4, the piston 11 (Fig. 2) falls in a range from the angle A0 to the angle A1, the piston 11 rises in a range from the angle A1 to the angle A2, the piston 11 falls in a range from the angle A2 to the angle A3 and the piston 11 rises in a range from the angle A3 to the angle A0.

At an angle A11, the fuel is injected into the intake passage 22 (Fig. 2) by the injector 19 (Fig. 2). In the forward direction, the angle A11 is positioned at a further advanced angle than the angle A0. Then, in a range from an angle A12 to an angle A13, the intake port 21 (Fig. 2) is opened by the intake valve 15 (Fig. 2). In the forward direction, the angle A12 is positioned at a further retarded angle than the angle A11 and at a further advanced angle than the angle A0, and the angle A13 is positioned at a further retarded angle than the angle A1. The range from the angle A12 to the angle A13 is an example of a normal intake range. Thus, the fuel-air mixture including fresh air and the fuel is introduced into the combustion chamber 31a (Fig. 2) through the intake port 21.

Next, at an angle A14, the fuel-air mixture in the combustion chamber 31a (Fig. 2) is ignited by the ignition plug 18 (Fig. 2). The angle A14 substantially coincides with the angle A2. This causes an explosion in the combustion chamber 31a. Energy generated by the explosion is turned into the driving force for the piston 11. Thereafter, in a range from an angle A15 to an angle A16, the exhaust port 23 (Fig. 2) is opened by the exhaust valve 16 (Fig. 2). In the forward direction, the angle A15 is positioned at a further advanced angle than the angle A3, and the angle A16 is positioned at a further retarded angle than the angle A0. The range from the angle A15 to the A16 is an example of a normal exhaust range. This causes a gas after combustion (hereinafter referred to as a combusted gas) to be exhausted from the combustion chamber 31a through the exhaust port 23.

In the following description, that the fuel is injected by the injector 19 at the angle A11 is referred to as normal injection operation, and that the ignition is performed by the ignition plug 18 at the angle A14 is referred to as normal ignition operation.

### (3-2) At the Time of Start-up

The operation of the engine unit EU at the time of the start-up of the engine 10 will be described with reference to Fig. 4. In Fig. 4, the crankshaft 13 (Fig. 2) is first rotated in the forward direction, so that the crank angle is adjusted to an angle A30. The angle A30 is in a range from the angle A0 to the angle A2, for example, and is preferably in a range from the angle A13 to the angle A2, in the forward direction. In the present example, the angle A30 is in the range from the angle A13 to the angle A2.

When the engine 10 is stopped, the normal injection operation by the injector 19 and the normal ignition operation by the ignition plug 18 are not performed, and the crank angle 13 is rotated by inertia. Because the pressure in the combustion chamber 31a is at a maximum when the piston 11 reaches the compression top dead center, the rotation of the crankshaft 13 is likely to be stopped right before the crank angle reaches the angle A2. In a case in which the rotation of the crankshaft 13 is stopped with the crank angle being near the angle A30, the crank angle does not have to be adjusted to the angle A30 at the time of the start-up of the engine 10.

Subsequently, the crankshaft 13 is rotated in the reverse direction from the angle A30. During the reverse rotation of the crankshaft 13, the crank angle changes in the direction of the arrow R2. In this case, as indicated by the arrows P5 to P8, the piston 11 falls in a range from the angle A2 to the angle A1, the piston 11 rises in a range from the angle A1 to the angle A0, the piston 11 falls in a range from the angle A0 to the angle A3 and the piston 11 rises in a range from the angle A3 to the angle A2. The moving direction of the piston 11 during the reverse rotation of the crankshaft 13 is opposite to the moving direction of the piston 11 during the forward rotation of the crankshaft 13.

While the intake port 21 is opened in a range from the angle A13 to the angle A12 and the exhaust port 23 is opened in a range from the angle A16 to the angle A15 even during the reverse rotation of the crankshaft 13 similarly to a case during the forward rotation in the present example, the present invention is not limited to this. During the reverse rotation of the crankshaft 13, the intake port 21 does not have to be opened in the range from the angle A13 to the angle A12, and further, the exhaust port 23 does not have to be opened in the range from the angle A16 to the angle A15.

The fuel is injected into the intake passage 22 (Fig. 2) by the injector 19 (Fig. 2) at an angle A23. In the reverse direction, the angle A23 is positioned at a further advanced angle than the angle A0. Further, the intake port 21 (Fig. 2) is opened by the intake valve 15 (Fig. 2) in the range from the angle A13 to the angle A12 and a range from the angle A21 to the angle A22. The range from the angle A21 to the angle A22 is an example of a start-up intake range. The angles A21, A22 are preferably in the range from the angle A0 to the angle A3 in the reverse direction. In the present example, the angles A21, A22 are positioned at further retarded angles than the angle A0 in the reverse direction. In this case, because the piston 11 rises in the range from the angle A1 to the angle A0, fresh air and the fuel are hardly introduced into the combustion chamber 31a in the range from the angle A13 to the angle A12. Thereafter, because the piston 11 falls in the range from the angle A0 to the angle A3, the fuel-air mixture including fresh air and the fuel is introduced into the combustion chamber 31 a through the intake port 21 in the range from the angle A21 to the A22.

Subsequently, at an angle A31, the rotation direction of the crankshaft 13 is switched from the reverse direction to the forward direction. The angle A31 is an example of a start-up ignition range, and is preferably in the range from the angle A3 to the angle A2 in the reverse direction. In the present example, the angle A31 is positioned at a slightly further advanced angle than the angle A2 in the reverse direction. Thus, the crank angle changes in the direction of the arrow R1. Further, at the angle A31, the fuel-air mixture in the combustion chamber 31a is ignited by the ignition plug 18 (Fig. 2) Thus, an explosion occurs in the combustion chamber 31a, and the crankshaft 13 is driven in the forward direction

In the present embodiment, the fuel-air mixture in the combustion chamber 31a is ignited by the ignition plug 18 after the driving of the crankshaft 13 by the starter/generator 14 in the reverse direction is stopped. Thus, the crankshaft 13 can be reliably driven in the forward direction. If the crankshaft 13 can be driven in the forward direction by adjustment of an ignition time or the like, the fuel-air mixture in the combustion chamber 31a may be ignited by the ignition plug 18 before the reverse rotation of the crankshaft 13 is stopped.

Thereafter, similar operation to Fig. 3 is performed. Specifically, in the range from the angle A15 to the angle A16, the exhaust port 23 is opened by the exhaust valve 16, and the combusted gas generated by the ignition at the A31 is exhausted from the combustion chamber 31a. The fuel is injected into the intake passage 22 (Fig. 2) at the angle A11 of Fig. 3, and the fuel-air mixture is introduced into the combustion chamber 31a in the range from the angle A12 to the angle A13. Subsequently, at the angle A14, the fuel-air mixture in the combustion chamber 31a is ignited by the ignition plug 18 (Fig. 2). Thereafter, the engine 10 proceeds to the normal running.

In this manner, at the time of the start-up of the engine 10, the fuel-air mixture is led to the combustion chamber 31a while the crankshaft 13 is rotated in the reverse direction by the starter/generator 14, and the fuel-air mixture in the combustion chamber 31a is ignited with the piston 11 being close to the compression top dead center. Thus, a torque for the crankshaft 13 to go over the angle A2 corresponding to the first compression top dead center can be obtained.

### (4) Backflow of Combusted Gas

When the start-up operation of the engine 10 as described above is performed with the combusted gas remaining in the exhaust passage 24 and the combustion chamber 31a a of Fig. 2, the combusted gas may flow backward to the intake passage 22 or the combustion chamber 31 a during the reverse rotation of the crankshaft 13, and variations in the air-fuel ratio may occur. Thus, the start-up of the engine 10 sometimes cannot be performed well.

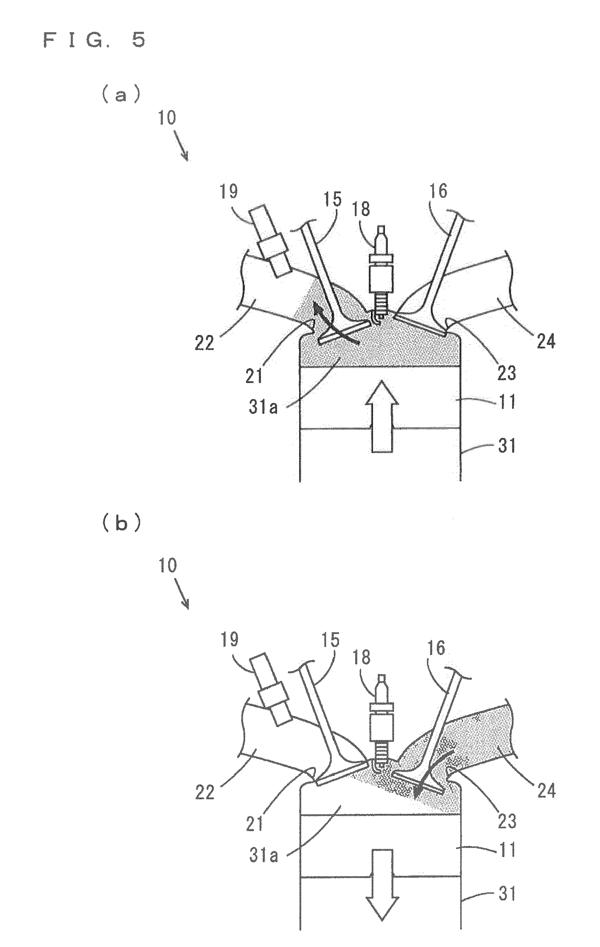

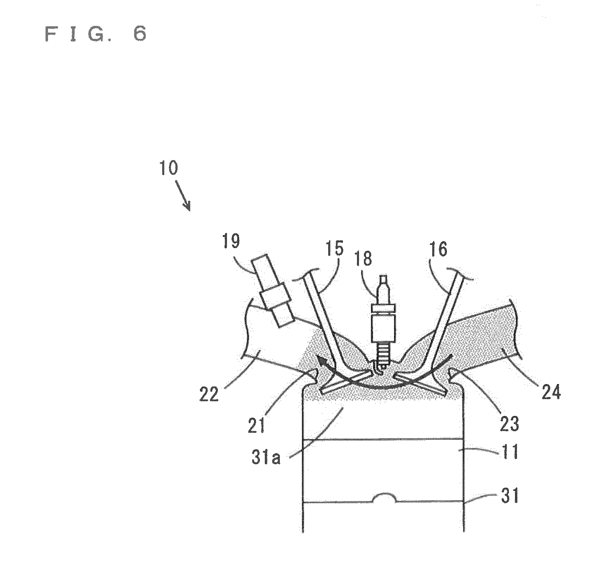

Figs. 5(a), 5(b) and 6 are diagrams for explaining the backflow of the combusted gas. As described above, during the reverse rotation of the crankshaft 13, the piston 11 rises with the intake port 21 being opened in the range from the angle A1 to the angle A0 of Fig. 4. In this case, as shown in Fig. 5(a), when the combusted gas remains in the combustion chamber 31a, the combusted gas may flow into the intake passage 22 through the intake port 21.

Further, during the reverse rotation of the crankshaft 13, the piston 11 falls with the exhaust port 23 being opened in the range from the angle A0 to the angle A3 of Fig. 4. In this case, as shown in Fig. 5(b), when the combusted gas remains in the exhaust passage 24, the combusted gas may flow into the combusted chamber 31 a through the exhaust port 23.

Further, in a range from the angle A16 to the angle A12 of Fig. 4, both of the intake port 21 and the exhaust port 23 are opened as shown in Fig. 6. In this case, when the combusted gas remains in the exhaust passage 24, the combusted gas may flow into the combustion chamber 31 a through the exhaust port 23, and may further flow into the intake passage 22 through the intake port 21.

In the present embodiment, at the time of the stop and the start-up of the engine 10, the ISC opening is adjusted, so that such backflow of the combusted gas is prevented. Hereinafter, the ISC opening at the time of the stop and the start-up of the engine 10 will be described.

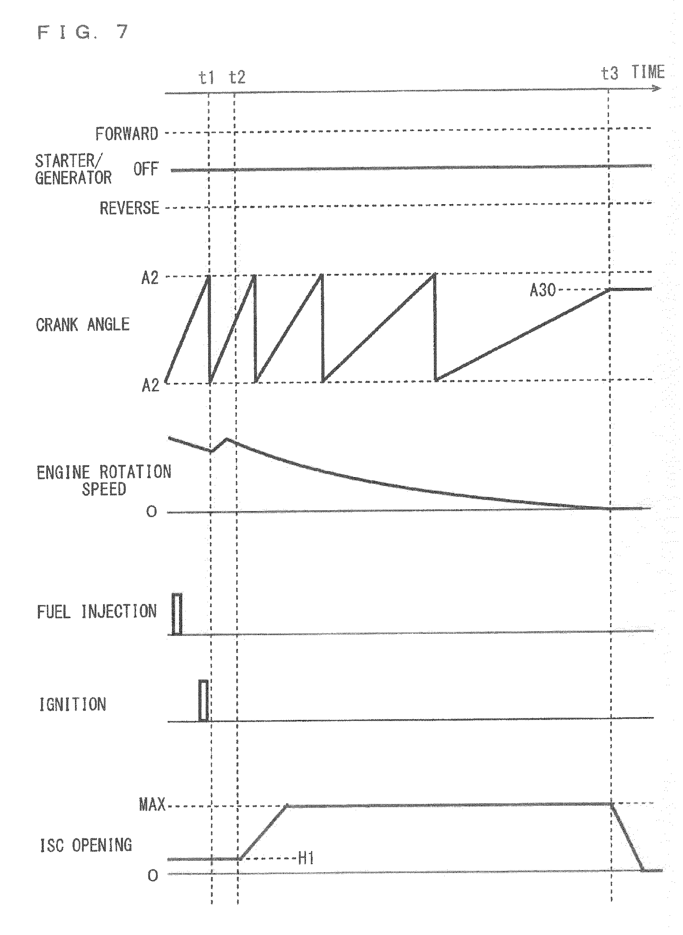

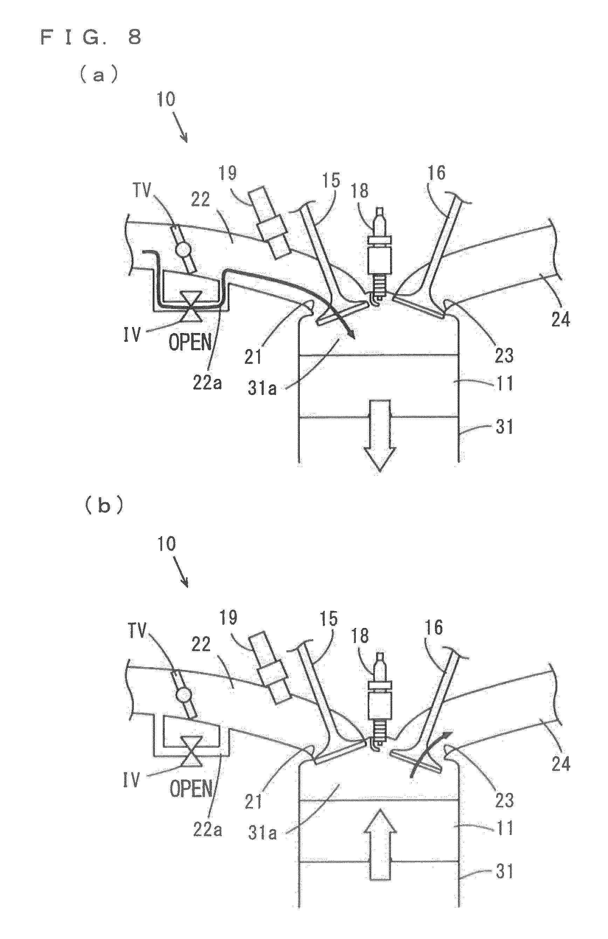

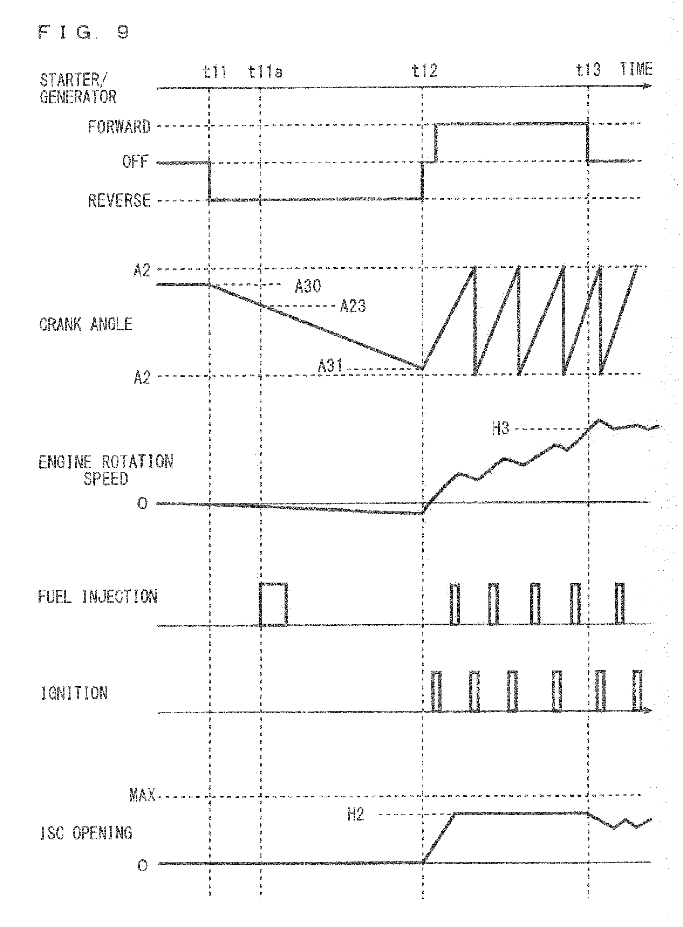

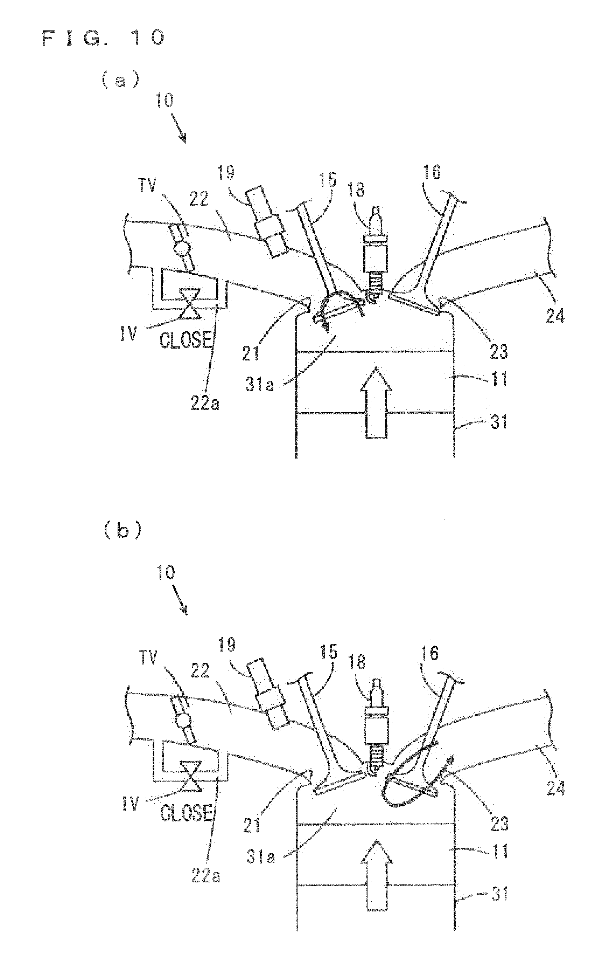

Fig. 7 is a timing chart for explaining the ISC opening at the time of the stop of the engine 10. Figs. 8(a) and 8(b) are schematic diagrams for explaining a flow of gas at the time of the stop of the engine 10. Fig. 9 is a timing chart for explaining the ISC opening at the time of the start-up of the engine 10. Figs. 10(a) and 10(b) are schematic diagrams for explaining the flow of gas at the time of the start-up of the engine 10.

In Figs. 7 and 9, a driving direction of the crankshaft 13 by the starter/generator 14, the change of the crank angle, the change of the rotation speed of the engine 10, the injection time of the fuel by the injector 19, the ignition time by the ignition plug 18 and the change of the ISC opening are shown. The injection time of the fuel and the ignition time are shown by rectangular pulses. The change of the crank angle is shown in the range of 720 degrees with the angle A2 of Fig. 4 being used as a basis. The rotation of the engine 10 is defined as the rotation of the crankshaft 13. In Figs. 7 and 9, the abscissas indicate time.

Description will be made of a case at the time of the stop of the engine 10. The opening of the throttle valve TV (the throttle opening) is maintained at 0 at the time of the stop of the engine 10.

In the example of Fig. 7, at a time point t1, a stop condition of the engine 10 is satisfied. The stop condition of the engine 10 is that the main switch is turned off, or that the above-mentioned idle stop condition is satisfied, for example. When the stop condition of the engine 10 is satisfied, the normal injection operation by the injector 19 and the normal ignition operation by the ignition plug 18 are stopped. Thus, the rotation speed of the engine 10 gradually decreases. In this case, the crankshaft 13 is rotated by inertia. The starter/generator 14 does not operate at the time of the stop of the engine 10.

At a time point t2, the control of the ISC valve IV is started such that the ISC opening is at a maximum. In the present example, the ISC opening is maintained at a value H1 in a period before the time point t2. In a predetermined time period from the time point t2, the ISC opening changes from the value H1 to the maximum value MAX.

At a time point t3, the rotation of the crankshaft 13 is stopped. In the present example, when the cranks angle is the angle A30, the rotation of the crankshaft 13 is stopped. When the rotation of the crankshaft 13 is stopped, the ISC valve IV is controlled such that the ISC opening is 0. The operation of the engine 10 from the time when the stop condition is satisfied until the time when the ISC opening is adjusted to 0 is equivalent to the stop operation of the engine 10.

In this manner, at the time of the stop of the engine 10, the crankshaft 13 is rotated by inertia with the ISC opening being adjusted to a maximum. In this case, fresh air flows in the intake passage 22, the combustion chamber 31a and the exhaust passage 24 without the production of newly combusted gas. Specifically, as shown in Fig. 8(a), fresh air is led from the intake passage 22 to the combustion chamber 31a with the intake port 21 being opened. Further, as shown in Fig. 8(b), fresh air is led from the combustion chamber 31a to the exhaust passage 24 together with the combusted gas with the exhaust port 23 being opened. The crankshaft 13 is rotated a multiple times, so that such operation is repeated a multiple number of times.

Thus, a sufficient amount of fresh air flows in the intake passage 22, the combustion chamber 31 a and the exhaust passage 24. As a result, the combusted gas is prevented from remaining in the intake passage 22, the combustion chamber 31 a and the exhaust passage 24.

Description will be made of a case at the time of the start-up of the engine 10. The throttle opening is maintained at 0 at the time of the start-up of the engine 10.

In the example of Fig. 9, the start-up condition of the engine 10 is satisfied at a time point t11. The start-up condition of the engine 10 is that the starter switch 41 (Fig. 2) is turned on or that the idle stop release condition is satisfied, for example. When the start-up condition of the engine 10 is satisfied, the crankshaft 13 is driven in the reverse direction by the starter/generator 14. Thus, the crank angle changes from the angle A30 in the direction of the arrow R2 of Figs. 3 and 4. At the time of the start-up of the engine 10, in a case in which the crank angle is not near the angle A30, the crank angle is preferably adjusted to be near the angle A30 before the start-up condition is satisfied.

At a time point t11a, when the crank angle reaches the angle A23, the fuel is injected by the injector 19. At a time point t12, when the crank angle reaches the angle A31, the driving of the crank angle 13 in the reverse direction by the starter/generator 14 is stopped, and the control of the ISC valve IV is started such that the ISC opening is a prescribed value H2. Thereupon, the fuel-air mixture in the combustion chamber 31a is ignited by the ignition plug 18, and the crankshaft 13 is driven in the forward direction. Further, the driving of the crankshaft 13 in the forward direction by the starter/generator 14 is started. Thereafter, the ISC opening becomes the prescribed value H2, and the normal injection operation by the injector 19 and the normal ignition operation by the ignition plug 18 are performed. Thus, the rotation speed of the engine 10 increases.

At a time point t13, when the rotation speed of the engine 10 reaches a predetermined threshold value H3, the operation of the starter/generator 14 is stopped. Further, the ISC opening is adjusted such that the rotation speed of the engine 10 is maintained in a constant range. Thus, the idling of the engine 10 is performed. The operation of the engine 10 from the time when the start-up condition is satisfied until the time when the rotation speed of the engine 10 reaches the threshold value H3 is equivalent to the start-up operation of the engine 10.

In this manner, at the time of the start-up of the engine 10, the crankshaft 13 is rotated in the reverse direction with the ISC opening being maintained at 0. In this case, the intake passage 22 is maintained at positive pressure. Thus, as shown in Fig. 10(a), even when the piston 11 rises with the intake port 21 being opened, the gas is unlikely to flow backward from the combustion chamber 31a to the intake passage 22. Therefore, even when the combusted gas remains in the combustion chamber 31a, the combusted gas is prevented from being led to the intake passage 22.

Further, in a range from the angle A16 to the A12 of Fig. 4, even when both of the intake port 21 and the exhaust port 23 are opened, the gas is unlikely to flow backward from the exhaust passage 24 to the combustion chamber 31a and the intake passage 22 as shown in Fig. 10(b). Therefore, even when the combusted gas remains in the exhaust passage 24, the combusted gas is prevented from being led to the intake passage 22 and the combustion chamber 31 a.

### (5) Engine Stop Process

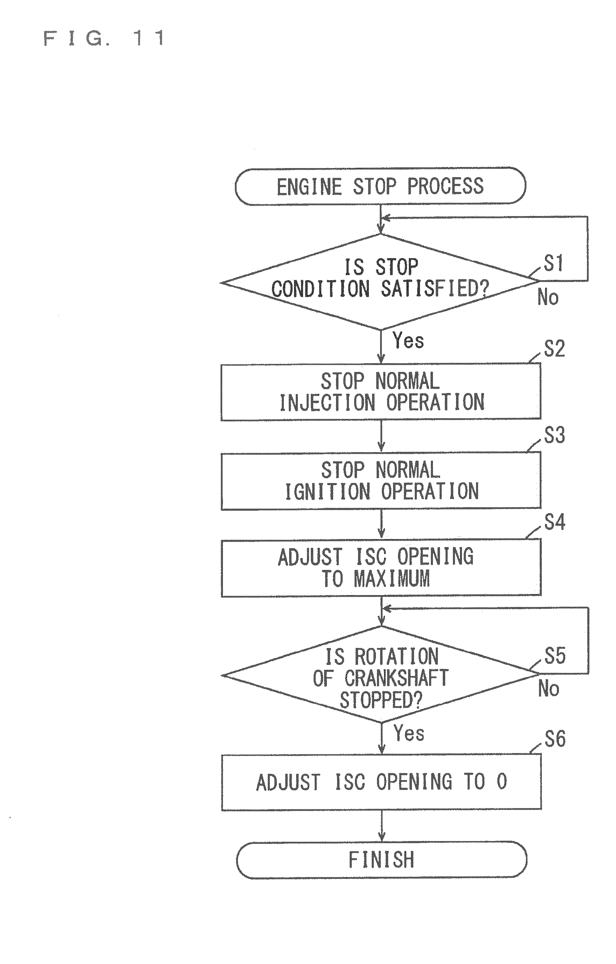

At the time of the stop of the engine 10, the ECU 6 performs the engine stop process based on the control program stored in the memory in advance. Fig. 11 is a flow chart of the engine stop process. The engine stop process is performed when the main switch (not shown) is turned off, or when the engine 10 is switched to the idle stop state, for example.

As shown in Fig. 11, the ECU 6 determines whether or not the above-mentioned stop condition is satisfied (step S1). When the stop condition is not satisfied, the ECU 6 repeats the process of step S1. When the stop condition is satisfied, the ECU 6 stops the normal injection operation by the injector 19 (step S2), and stops the normal ignition operation by the ignition plug 18 (step S3).

Next, the ECU 6 controls the ISC valve IV such that the ISC opening is at a maximum (step S4) Next, the ECU 6 determines whether or not the rotation of the crankshaft 13 is stopped based on the detection result of the crank angle sensor 43 (step S5). When the rotation of the crankshaft 13 is not stopped, the ECU 6 repeats the process of step S5. When the rotation of the crankshaft 13 is stopped, the ECU 6 controls the ISC valve IV such that the ISC opening is 0 (step S6). Thus, the ECU 6 terminates the engine stop process. The processes of steps S2 to S6 are performed at the time of the stop operation of the engine 10.

### (6) Engine Start-up Process

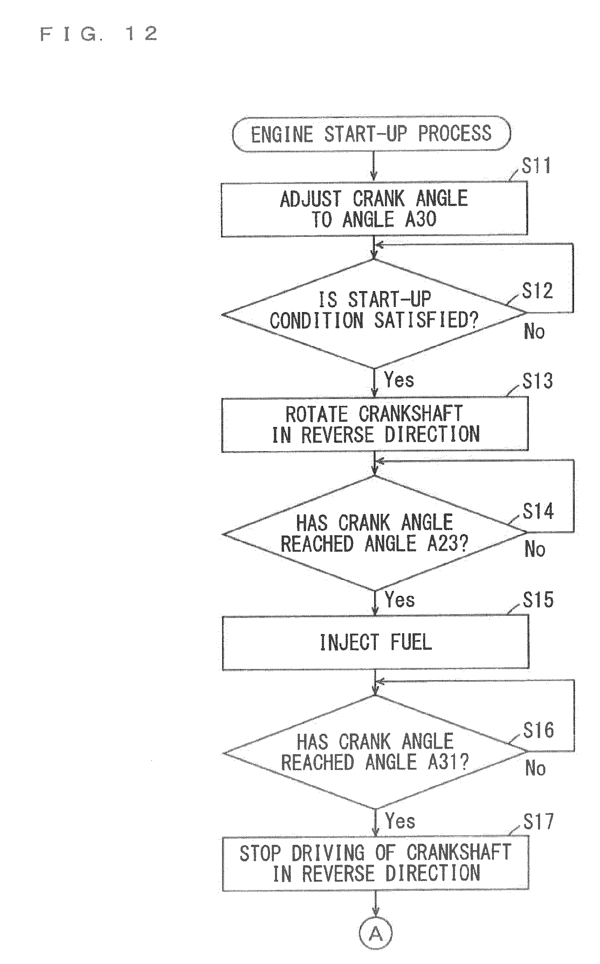

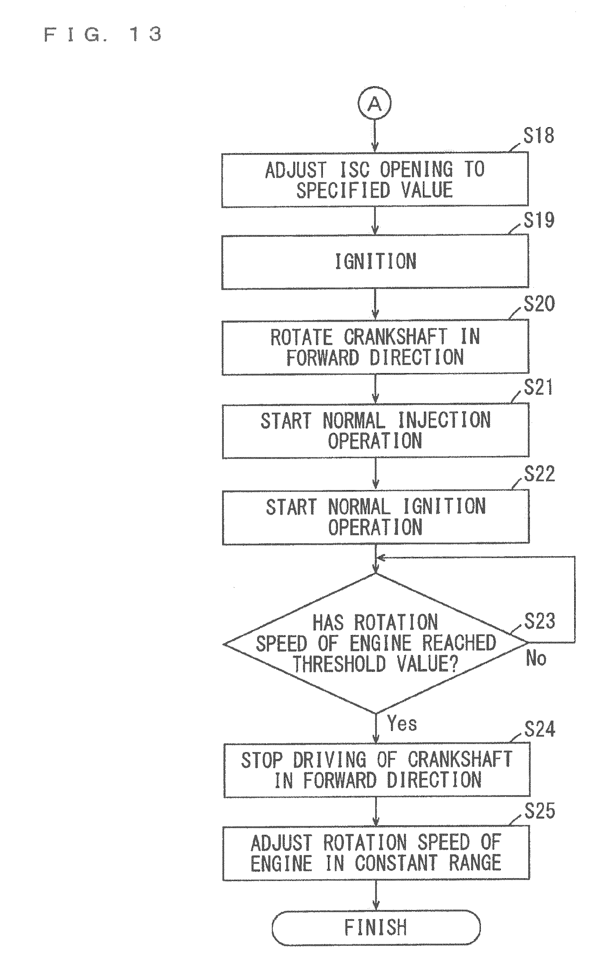

At the time of the start-up of the engine 10, the ECU 6 performs the engine start-up process based on the control program stored in the memory in advance. Figs. 12 and 13 are flowcharts of the engine start-up process. The engine start-up process is performed when the main switch (not shown) is turned on, or when the above-mentioned engine stop process is terminated in the idle stop state, for example.

As shown in Fig. 12, the ECU 6 first adjusts the crank angle to the angle A30 (step S11). For example, when the crank angle of the crankshaft 13 in a stop state is stored in the memory and the like, the starter/generator 14 is controlled based on the stored crank angle, so that the crank angle is adjusted to the angle A30. On the other hand, when the crank angle of the crankshaft 13 in the stop state is not stored, the crankshaft 13 is rotated in the forward rotation by the starter/generator 14 only for a constant time period by a torque that is determined in advance such that the piston 11 does not reach the compression top dead center. Thus, the crank angle can be adjusted to be near the angle A30. Further, as described above, when the crank angle of the crankshaft 13 in the stop state is near the angle A30, the adjustment of the crank angle in step S11 does not have to be performed.

Next, the ECU 6 determines whether or not the above-mentioned start-up condition is satisfied (step S12). When the start-up condition is not satisfied, the ECU 6 repeats the process of step S12. When the start-up condition is satisfied, the ECU 6 controls the starter/generator 14 such that the crankshaft 13 is rotated in the reverse direction (step S13).

Next, the ECU 6 determines whether or not the crank angle has reached the angle A23 based on the detection results of the intake pressure sensor 42 and the crank angle sensor 43 (step S14). When the crank angle has not reached the angle A23, the ECU 6 repeats the process of step S14: When the crank angle has reached the angle A23, the ECU 6 controls the injector 19 such that the fuel is injected into the intake passage 22 (step S15). In this case, a pulse signal may be supplied from the crank angle sensor 43 to the ECU 6 when the crank angle reaches the angle A23, and the ECU 6 may control the injector 19 such that the fuel is injected in response to the pulse signal.

Next, the ECU 6 determines whether or not the crank angle has reached the angle A31 based on the detection results of the intake pressure sensor 42 and the crank angle sensor 43 (step S16). When the crank angle has not reached the angle A31, the ECU 6 repeats the process of step S16. When the crank angle has reached the angle A31, the ECU 6 controls the starter/generator 14 such that the driving of the crankshaft 13 in the reverse direction is stopped (step S17). Further, the ECU 6 controls the ISC valve IV such that the ISC opening is the prescribed value H2 (Fig. 9) (step S18).

After the recognition of which stroke the engine 10 is in, at the time of the detection of the crank angle, the detection result of the intake pressure sensor 42 does not have to be used, and only the detection result of the crank angle sensor 43 may be used.

Next, the ECU 6 controls the ignition plug 18 such that the fuel-air mixture in the combustion chamber 31a is ignited (step S19), and controls the starter/generator 14 such that the crankshaft 13 is rotated in the forward direction (step S20). Next, the ECU 6 starts the normal injection operation by the injector 19 (step S21), and starts the normal ignition operation by the ignition plug 18 (step S22).

Then, the ECU 6 determines whether or not the rotation speed of the engine 10 (the rotation speed of the crankshaft 13) has reached the threshold value H3 (Fig. 9) based on the detection result of the crank angle sensor 43 (step S23). When the rotation speed of the engine 10 has not reached the threshold value H3, the ECU 6 repeats the process of step S23. When the rotation speed of the engine 10 has reached the threshold value H3, the ECU 6 controls the starter/generator 14 such that the driving of the crankshaft 13 in the forward direction is stopped (step S24). Further, the ECU 6 adjusts the ISC opening such that the rotation speed of the engine 10 is maintained in a constant range (step S25). Thus, the idling of the engine 10 is performed. Thereafter, the ECU 6 terminates the engine start-up process. The processes of steps S13 to S24 are performed at the time of the start-up operation of the engine 10.

### (7) Effects

In the engine system 200 according to the present embodiment, at the time of the stop of the engine 10, the injection of the fuel and the ignition of the fuel-air mixture are not performed, and the crankshaft 13 is rotated in the forward direction by inertia, with fresh air flowing in the engine 10. In this case, fresh air continuously flows in the intake passage 22, the combustion chamber 31a and the exhaust passage 24. Thus, the combusted gas is sufficiently exhausted from the intake passage 22, the combustion chamber 31a and the exhaust passage 24.

At the time of the start-up of the engine 10, the crankshaft 13 is rotated in the reverse direction and the intake port 21 is opened and the fuel-air mixture is introduced into the combustion chamber 31a when the crank angle is in the range from the angle A21 to the angle A22. In this case, because the combusted gas is sufficiently exhausted from the engine 10, even when the crankshaft 13 is rotated in the reverse direction, the combusted gas is prevented from flowing backward and being led to the combustion chamber 31a and the intake passage 22. Thus, the air-fuel ratio in the combustion chamber 31 a can be accurately adjusted.

Thereafter, the fuel-air mixture in the combustion chamber 31a is ignited when the crank angle is at the angle A31, and the crankshaft 13 is driven in the forward direction by the energy generated by the explosion. As described above, the combusted gas is prevented from flowing backward, so that the fuel-air mixture is prevented from insufficiently combusted. Thus, the crankshaft 13 can easily go over the crank angle corresponding to the compression top dead center. As a result, the engine 10 can be stably and quickly started.

Further, in the present embodiment, the throttle valve TV and the ISC valve IV are closed during the reverse rotation of the crankshaft 13. Thus, because the intake passage 22 is maintained at the positive pressure during the reverse rotation of the crankshaft 13, even when the crankshaft 13 is rotated in the reverse direction, the gas is unlikely to flow backward. Therefore, the combusted gas is sufficiently prevented from being led to the combustion chamber 31a and the intake passage 22.

Further, in the present embodiment, the introduction of fresh air at the time of the stop of the engine 10 and the maintenance of the positive pressure in the intake passage 22 at the time of the start-up of the engine 10 are realized by the ISC valve IV separately provided from the throttle valve TV. Therefore, the control of the throttle valve TV and the ISC valve IV becomes easier as compared to a case in which these are realized by the throttle valve TV.

Further, in the present embodiment, the ISC valve IV is controlled such that the rotation speed of the crankshaft 13 is maintained in a constant range, after the start-up of the engine 10 with the throttle valve TV being closed. Thus, the idling of the engine 10 can be appropriately maintained.

Further, in the present embodiment, the exhaust is performed in the range from the angle A15 to the A16 during the forward rotation of the crankshaft 13, and the intake is performed in the range from the angle A21 to the angle A22 during the reverse rotation of the crankshaft 13. The range from the angle A21 to A22 is included in the range from the angle A15 to the A16. Thus, the exhaust during the forward rotation and the intake during the reverse rotation can be respectively appropriately performed.

Further, in the present embodiment, at the angle A31, the fuel-air mixture in the combustion chamber 31a is ignited by the ignition plug 18 after the driving of the crankshaft 13 in the reverse direction is stopped. Thus, the crankshaft 13 can be reliably rotated in the forward direction after the ignition of the fuel-air mixture.

Further, in the present embodiment, the crankshaft 13 is driven in the forward direction by the starter/generator 14 after the ignition of the fuel-air mixture at the angle A31. Thus, a larger torque in the forward direction can be obtained. Therefore, the crankshaft 13 can reliably go over the crank angle corresponding to the compression top dead center.

### (8) Other Embodiments

### (8-1)

While the crankshaft 13 is rotated in the reverse direction with the ISC opening being maintained at 0 at the time of the start-up of the engine 10 in the above-mentioned embodiment, the present invention is not limited to this. When the combusted gas is prevented from remaining, the crankshaft 13 may be rotated in the reverse direction with the ISC opening being larger than 0**.** In this case, even when the gas flows backward to the combustion chamber 31a and the intake passage 22, because the gas is not the combusted gas, the start-up of the engine 10 is prevented from being affected negatively.

### (8-2)

While the ISC opening is adjusted to 0 in a case in which the rotation of the crankshaft 13 is stopped at the time of the stop of the engine 10 in the above-mentioned embodiment, the present invention is not limited to this. For example, a threshold value of the rotation speed larger than 0 is determined in advance. When the rotation speed of the engine 10 is not less than the threshold value, the ISC valve IV may be controlled such that fresh air is introduced into the combustion chamber 31a, and when the rotation speed of the engine 10 is lower than the threshold value, the ISC valve IV may be controlled such that fresh air is not introduced into the combustion chamber 31a.

### (8-3)

While the ISC opening is adjusted to 0 at the time of the stop of the rotation of the crankshaft 13 in the above-mentioned embodiment, the present invention is not limited to this. The ISC opening does not have to be adjusted at the time of the stop of the rotation of the crankshaft 13, but the ISC opening may be adjusted to 0 before the reverse rotation of the crankshaft 13 is started at the time of the start-up of the engine 10. Further, the ISC opening may be adjusted to be slightly larger than 0 after the stop of the engine 10, and the ISC opening may be adjusted to 0 before the reverse rotation of the crankshaft 13 is started at the time of the start-up of the engine 10.

### (8-4)

While the introduction of fresh air into the combustion chamber 31a at the time of the stop of the engine 10 and the maintenance of the positive pressure in the intake passage 22 at the time of the start-up of the engine 10 are realized by the adjustment of the ISC opening in the above-mentioned embodiment, the present invention is not limited to this. For example, when the electromagnetic valve is used as the throttle valve TV, the introduction of fresh air into the combustion chamber 31a at the time of the stop of the engine 10 and the maintenance of the positive pressure in the intake passage 22 at the time of the start-up of the engine 10 may be realized by the adjustment of the throttle opening. In this case, the auxiliary passage 22a and the ISC valve IV do not have to be provided.

Further, another flow rate adjustment mechanism that can realize the above-mentioned function at the time of the stop and the start-up of the engine 10 may be provided in addition to the throttle valve TV and the ISC valve IV.

### (8-5)

While both of the normal injection operation by the injector 19 and the normal ignition operation by the ignition plug are stopped at the time of the stop of the engine 10 in the above-mentioned embodiment, the present invention is not limited to this. If the combustion of the fuel-air mixture in the combustion chamber 31a is not performed, only one of the normal injection operation and the normal ignition operation may be stopped.

### (8-6)

In the above-mentioned embodiment, the fuel is injected into the intake passage 22 by the injector 19 with the intake port 21 being closed, and the fuel is thereafter led into the combustion chamber 31a from the intake passage 22 through the intake port 21 by the opening of the intake port 21, however, the present invention is not limited to this. The fuel may be directly injected into the combustion chamber 31 a from the injector 19 through the intake port 21 with the intake port 21 being opened.

### (8-7)

While the rotation angle in the range of the two rotations (720 degrees) of the crankshaft 13 is obtained based on the crank angle detected by the crank angle sensor 43 and the pressure in the intake passage 22 detected by the intake pressure sensor 42 in the above-mentioned embodiment, the present invention is not limited to this. For example, when the valve driver 17 is a cam shaft, a cam angle sensor that detects the rotation angle of the valve driver 17 (hereinafter referred to as a cam angle) may be provided, and the rotation angle in the range of the two rotations of the crankshaft 13 may be obtained based on the detection result of the cam angle sensor. Alternatively, the rotation angle in the range of the two rotations of the crankshaft 13 may be obtained based on the crank angle detected by the crank angle sensor 43 and the cam angle detected by the cam angle sensor. In this case, more accurate rotation angle in the range of the two rotations of the crankshaft 13 can be obtained.

### (8-8)

While the embodiment described above is an example in which the present invention is applied to the motorcycle, the invention is not limited to this. The present invention may be applied to another saddle-straddling type motor vehicle such as a motor tricycle, an ATV (All Terrain Vehicle) or the like.

### (9) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the engine system 200 is an example of an engine system, the engine unit EU is an example of an engine unit, the engine 10 is an example of an engine, the throttle valve TV or the ISC valve IV is an example of a flow rate adjuster, the ECU 6 is an example of a controller, the intake passage 22 is an example of an intake passage, the cylinder 31 is an example of a cylinder, the combustion chamber 31a is an example of a combustion chamber, the injector 19 is an example of a fuel injection device and the ignition plug 18 is an example of an ignition device. Further, the intake port 21 is an example of an intake port, the exhaust port 23 is an example of an exhaust port, the intake valve 15 is an example of an intake valve, the exhaust valve 16 is an example of an exhaust valve, the valve driver 17 is an example of a valve driver, the crankshaft 13 is an example of a crankshaft, the starter/generator 14 is an example of a rotation driver, the throttle valve TV is an example of a throttle valve, the auxiliary passage 22a is an example of an auxiliary passage, the ISC valve IV is an example of an auxiliary valve and the crank angle sensor 43 is an example of a rotation speed detector.

Further, the motorcycle 100 is an example of a saddle-straddling type motor vehicle, the rear wheel 7 is an example of a drive wheel and the vehicle 1 is an example of a main body.

As each of constituent elements recited in the claims, various other elements having configurations or functions described in the claims can be also used.

### INDUSTRIAL APPLICABILITY

The present invention can be effectively utilized for various types of vehicles.

## Claims

1. An engine system (200), comprising:
an engine unit (EU) that includes an engine (10) and a rotation driver (14);
an intake passage (22) arranged to lead air to the engine (10);
a flow rate adjuster (TV, IV) configured to adjust a flow rate of air in the intake passage (22); and
a controller (6) configured to control the engine unit (EU) and the flow rate adjuster (TV, IV), wherein
the engine (10) includes
a cylinder (31),
a fuel injection device (19) arranged to inject fuel into the intake passage (22) at a downstream of the flow rate adjuster (TV, IV),
an ignition device (18) configured to ignite a fuel-air mixture in a combustion chamber (31a), and
a valve driver (17) configured to respectively drive an intake valve (15) for opening and closing an intake port (21) and an exhaust valve (16) for opening and closing an exhaust port (23),
the rotation driver (14) configured to drive a rotation of a crankshaft (13) of the engine (10) in a forward direction (R1) or a reverse direction (R2),
the valve driver (17) configured to drive the intake valve (15) such that the intake port (21) is opened when a crank angle is in a predetermined start-up intake range (A21-A22), during the rotation of the crankshaft (13) in the reverse direction (R2), and
the controller (6) configured to
control the flow rate adjuster (TV, IV) such that air flows in the intake passage (22) and the combustion chamber (31a), and control the fuel injection device (19) and the ignition device (18) such that the crankshaft (13) is rotated in the forward direction (R1) by inertia without combustion of the fuel-air mixture in the combustion chamber (31a), at a time of stop operation of the engine (10), and
control the rotation driver (14) such that the crankshaft (13) is rotated in the reverse direction (R2) until the crank angle goes over the start-up intake range (A21-A22) and reaches a predetermined start-up ignition range (A31), control the fuel injection device (19) such that the fuel-air mixture is introduced into the combustion chamber (31a) through the intake port (21) when the crank angle is in the start-up intake range (A21-A22), and control the ignition device (18) such that the fuel-air mixture in the combustion chamber (31a) is ignited when the crank angle is in the start-up ignition range (A31), at a time of start-up operation of the engine (10).

2. The engine system (200) according to claim 1, wherein
the controller (6) is configured to control the flow rate adjuster (TV, IV) such that a combusted gas does not flow backward to the intake passage (22), during the rotation of the crankshaft (13) in the reverse direction (R2) by the rotation driver (14).

3. The engine system (200) according to claim 2, wherein
the engine unit (EU) further includes a rotation speed detector (43) configured to detect a rotation speed of the crankshaft (13), and
the controller (6) is configured to control the flow rate adjuster (TV, IV) such that air flows in the intake passage (22) and the combustion chamber (31a) when a rotation speed detected by the rotation speed detector (43) is not less than a predetermined value, and control the flow rate adjuster (TV, IV) such that air does not flow in the intake passage (22) and the combustion chamber (31a) when the rotation speed detected by the rotation speed detector (43) is lower than the predetermined value, at the time of the stop operation of the engine (10).

4. The engine system (200) according to any one of claims 1 to 3, wherein
the flow rate adjuster (TV, IV) includes a throttle valve (TV) provided in the intake passage (22).

5. The engine system (200) according to any one of claims 1 to 3, further comprising a throttle valve (TV) provided in the intake passage (22), wherein
the flow rate adjuster (TV, IV) includes
an auxiliary passage (22a) provided at the intake passage (22) to bypass the throttle valve (TV), and
an auxiliary valve (IV) provided to open and close the auxiliary passage (22a).

6. The engine system (200) according to claim 5, wherein
the controller (6) configured to control the auxiliary valve (IV) such that the rotation speed of the crankshaft (13) is maintained in a constant range, after a start-up of the engine (10) with the throttle valve (TV) being closed.

7. The engine system (200) according to any one of claims 1 to 6, wherein
the valve driver (17) configured to drive the exhaust valve (16) such that the exhaust port (23) is opened when the crank angle is in a normal exhaust range (A15-A16), and drive the intake valve (15) such that the intake port (21) is opened when the crank angle is in a normal intake range (A12-A13), during the rotation of the crankshaft (13) in the forward direction (R1), and
the normal exhaust range (A15-A16) includes the start-up intake range (A21-A22).

8. A saddle-straddling type motor vehicle, comprising:
a main body (1) that has a drive wheel (7); and
the engine system (200) according to any one of claims 1 to 7 configured to generate motive power for rotating the drive wheel (7).
